# DEMANDE DE BREVET EUROPEEN

(11) **EP 1 054 366 A1**
(43) Date de publication de la demande: **22.11.2000**
(21) Numéro de dépôt: 00401358.7
(22) Date de dépôt: 18.05.2000
(51) Int. Cl.: G07F 7/10

(54) **Procédé pour réaliser lors d'une première opération autorisée par une première carte au moins une seconde opération**

(30) Priorité: 21.05.1999 FR 9906526
(71) Demandeur: ALCATEL, 75008 Paris (FR)
(72) Inventeur: Bodin, Jannick, 92380 Garches (FR); Bourrier, Pascal, 75009 Paris (FR); Durand, Romain, 75008 Paris (FR)
(74) Mandataire: Croonenbroek, Thomas Jakob

(57) **Abrégé**

L'invention concerne un procédé pour pouvoir utiliser un seul lecteur de carte à puce avec différentes cartes à puces en même temps. Selon le procédé, avant de retirer la première coite à puce (5), on associe cette carte à puce (5) audit terminal (1) par un lien informatique,
- on réalise une seconde opération avec la seconde carte à puce (5),
- après la fin de seconde opération, on réinsère la première coite à puce (5) dons le lecteur de carte à puce,
- on vérifie le lien informatique par lequel la première carte à puce (5) et le terminal (1) sont associés,
- on autorise la poursuite de la première opération en cours uniquement pour un résultat positif de l'étape de vérification,
- on supprime le lien informatique entre la première carte à puce (5) et le terminal (1), et
   on autorise l'utilisation de la première carte (5) avec d'autres terminaux.

## Description

La présente invention concerne un procédé pour réaliser, lors d'une première opération autorisée par une première carte à puce et ayant lieu entre un terminal et un serveur distant d'applications, au moins une seconde opération autorisée par cette première carte à puce ou une seconde carte à puce, le terminal comprenant un lecteur de cartes à puce apte à recevoir la première et la seconde cartes à puce.

La présente invention concerne tous les systèmes de terminaux - carte à puce permettant de réaliser certaines opérations ou transactions avec un serveur distant telles que les facturations téléphoniques, les opérations bancaires, les paiements demandés pour entrer dans les salles de cinéma et pour bénéficier des services des transports en commun etc.

Plus particulièrement, l'invention concerne des appareils portables du type radiotéléphone ayant un lecteur de carte à puce dans lequel l'utilisateur insère une carte d'identification d'abonné pour permettre le fonctionnement de l'appareil. C'est à cet exemple que l'on se référera par la suite pour décrire le procédé selon l'invention. Mais bien entendu, le procédé pourra également être utilisé avec tout autre terminal ayant un lecteur de carte à puce et permettant d'accéder à un serveur distant pour passer une opération, tel que par exemple un guichet automatique bancaire ou autre.

On connaît des téléphones portables équipés de deux lecteurs de cartes à puce, un premier lecteur permettant de lire une carte d'identification d'abonné appelée couramment carte SIM (pour 〈〈 Subscriber Identity Module 〉〉 en anglais) sur le marché européen et un second lecteur de cartes à puce. Le second lecteur est utilisé pour des cartes dites 〈〈 d'application 〉〉 et permet par exemple de passer une opération bancaire ou de recharger un porte-monnaie électronique en cours de communication.

On comprend donc que la lecture et la reconnaissance de cette carte SIM donne à l'utilisateur du téléphone l'autorisation de passer des communications par le réseau de l'opérateur auprès duquel il a souscrit son abonnement. Dans le cadre de la présente invention, ceci constitue par exemple une première opération autorisée par une première carte à puce. La lecture de la seconde carte à puce permet alors de passer en cours de communication une seconde opération ou transaction qui est indépendante de l'opérateur du réseau de télécommunications.

Toutefois, un deuxième lecteur de codes à puce dons un téléphone portable présente des inconvénients importants, cor il augmente le prix de revient du poste, il pèse dans la consommation d'énergie du poste et réduit par conséquent l'autonomie de celui-ci, et il tend à augmenter l'encombrement du poste.

Par ailleurs, on connaît des codes à puce dites "multi-fonctions" ou "à applications multiples". Ces cartes à puces comportent des données informatiques permettant d'accéder à différentes applications, par exemple le retrait d'argent à une banque, la consultation d'une banque de données sur Internet, l'accès à un immeuble protégé ou encore de passer des appels téléphoniques par un téléphone mobile.

Toutefois, avec une telle carte multi-fonctions, on ne peut réaliser qu'une seule opération à la fois. Ainsi, si la carte multi-fonctions est utilisée comme carte SIM dans un poste de téléphone mobile, elle ne peut pas être utilisée en même temps comme carte bancaire. Si l'utilisateur souhaite utiliser sa carte multi-fonctions comme carte bancaire, il lui faut d'abord éteindre son poste téléphonique et retirer la carte. Pendant ce temps, il ne peut pas être joint sur son poste téléphonique.

La présente invention vise à pallier ces divers inconvénients en proposant un procédé permettant de manière sécurisée de passer au cours d'une première opération telle qu'une communication téléphonique, au moins une seconde opération, autorisée par la première carte à puce ou par une seconde carte à puce.

A cet effet, l'invention a pour objet un procédé pour réaliser, lors d'une première opération autorisée par une première carte à puce et ayant lieu entre un terminal et un serveur distant, ou moins une seconde opération de type différent de celui de la première opération, le terminal comprenant un lecteur de cartes à puce apte à recevoir la première carie à puce, caractérisé en ce que
- avant de retirer la première carte à puce, introduite dans le lecteur pour autoriser la première opération en cours, on associe cette carte à puce audit terminal par un lien informatique, de sorte qu'au moins jusqu'à la fin de la première opération en cours, l'utilisation de cette carte à puce avec d'autres terminaux que celui auquel cette carte à puce est associée, est défendue pour les opérations de même type que celui de la première opération,
- on réalise ladite au moins une seconde opération avec soit la première carte à puce, soit avec une ou plusieurs secondes cartes à puce insérées tour à tour dans le lecteur à la place de la première carte à puce,
- après la fin de ladite au moins une seconde opération, on réinsère la première carte à puce dans le lecteur de carte à puce,
- on vérifie le lien informatique par lequel la première carte à puce et le terminal sont associés,
- on autorise la poursuite de la première opération en cours uniquement pour un résultat positif de l'étape de vérification,
- on supprime le lien informatique entre la première carte à puce et le terminal, et
- on autorise l'utilisation de la première carte avec d'autres terminaux pour des opérations du même type que celui de la première opération à condition que les étapes de remplacement et de vérification du lien informatique se sont déroulées de manière positive.

Le procédé selon l'invention peut comporter en outre une ou plusieurs des caractéristiques suivantes :
- la première opération est une procédure d'identification d'abonné et la première carte à puce est une carte d'identification d'abonné,
- la première carte à puce est une carte multi-fonctions servant d'une part à l'identification de l'abonné et, d'autre part, à autoriser au moins une autre opération de type différent de celui de la première opération,
- ledit terminal est un terminal de télécommunications, notamment un téléphone mobile,
- ladite première opération est une procédure d'identification d'abonné auprès d'un opérateur du réseau de télécommunications auquel le terminal de télécommunications est relié, cette première opération permettant au moins de recevoir des appels téléphoniques,
- ladite première opération permet en outre de continuer un appel téléphonique commencé avant le retrait de la première carte du lecteur de carte du terminal,
- ladite première opération permet de passer des appels téléphoniques sur le réseau de télécommunications auquel le terminal est relié,
- lors de l'étape d'association de la première carte à puce au terminal par un lien informatique, on échange des données d'authentification mutuelle entre le terminal et la première carte à puce.
- les données d'authentification mutuelle sont échangées sous forme d'une clé de cryptage,
- pour défendre l'utilisation, pour les opérations du même type que la première opération, de la première carte avec d'autres terminaux que celui auquel la première carte est associée, on enregistre dans le serveur relatif à la première opération une information de refus d'accès à des opérations par l'intermédiaire de la première carte,
- pour défendre l'utilisation de la première carte pour les opérations de même type que la première opération avec d'autres terminaux que celui auquel la première carte est associée, on rend la première carte à puce elle-même inutilisable,
- après écoulement d'un intervalle de temps prédéterminé après le retrait de la première carte ou si l'étape de remplacement ou l'étape de vérification du lien informatique se sont déroulées de manière négative, on bloque définitivement l'utilisation de la première carte,
- après écoulement d'un intervalle de temps prédéterminé après le retrait de la première carte ou si l'étape de remplacement ou l'étape de vérification du lien informatique se sont déroulées de manière négative, on annule la seconde opération,
- l'on autorise de nouveau l'utilisation de la première carte avec d'autres terminaux,
- la seconde opération est uniquement autorisée par une seconde carte à puce insérée dans le lecteur de cartes à puce du terminal,
- la ou les secondes cartes à puce sont des porte-monnaie électroniques ou des cartes d'accès de services.

D'autres caractéristiques et avantages de l'invention ressortiront de la description suivante, donnée à titre d'exemple, sans caractère limitatif, en regard des dessins annexés sur lesquels :
- La figure 1 montre un schéma synoptique d'un ensemble de divers éléments d'un système de télécommunications pour illustrer la mise en oeuvre du procédé selon l'invention,
- La figure 2 est un organigramme montrant les différentes étapes du procédé selon l'invention,
- La figure 3 est un organigramme montrant une variante du procédé illustré sur la figure 2.

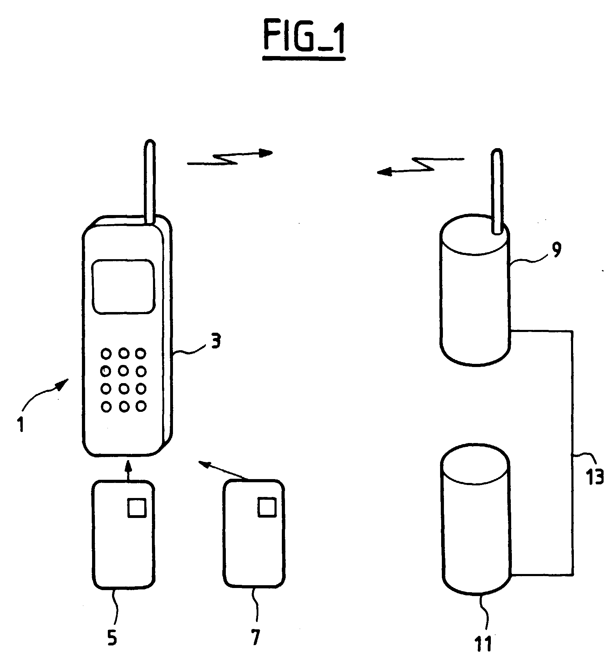

La figure 1 est un schéma synoptique simplifié pour illustrer la mise en oeuvre du procédé selon l'invention.

On y a représenté un terminal 1, de préférence un terminal de télécommunications, sous la forme d'un téléphone mobile 3 possédant un seul lecteur de cartes à puce (non visible sur la figure). Le lecteur du téléphone mobile 1 est réalisé de manière à ce qu'il puisse recevoir des cartes à puce de même format, mais de types différents, telles que des cartes à puce multi-fonctions, des cartes d'identification d'abonné 5 (cartes SIM) pour autoriser les communications téléphoniques via le réseau téléphonique d'un opérateur auprès duquel l'abonné a souscrit, ou des cartes d'application 7 comme par exemple un porte-monnaie électronique.

Grâce à la carte SIM 5, l'abonné peut s'identifier auprès d'un serveur 9 de l'opérateur du réseau téléphonique auquel l'utilisateur a souscrit. Ce serveur 9 contient une base de données de tous les abonnés et des autorisations d'accès au réseau téléphonique de l'opérateur par l'intermédiaire des cartes SIM.

Sur la figure 1, on a également représenté un serveur distant d'applications 11 appartenant par exemple à une banque auprès duquel l'abonné possède un compte bancaire. Ce serveur peut être appelé par l'abonné depuis son téléphone mobile. Dans ce cas, le serveur de l'opérateur téléphonique 9 de l'opérateur est relié, par exemple par une voie téléphonique filaire 13 au serveur 11 de la banque.

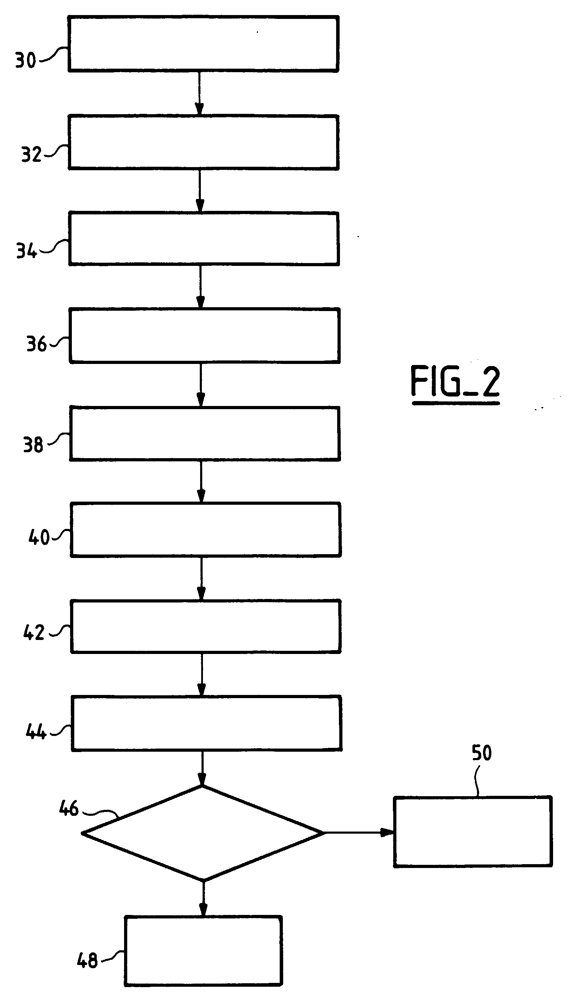

On se réfère maintenant à la figure 2 et on expliquera le procédé selon l'invention. A titre d'exemple on considère donc que la carte 7 est un porte-monnaie électronique lequel l'abonné souhaite charger à partir de son téléphone mobile 3, alors que ce dernier n'est équipé que d'un seul lecteur de carte à puce.

Comme cela est connu, pour activer son téléphone mobile 3, l'abonné insère lors d'une étape 30 la carte d'identification d'abonné (carte SIM) 5 dans le lecteur de cartes à puce. Puis, lors de l'étape 32, le téléphone mobile 3 s'identifie auprès du serveur 9 de l'opérateur téléphonique. Le téléphone est donc relié au réseau radio-téléphonique et apte à recevoir et à transmettre par exemple des appels téléphoniques ou des messages courts SMS ( SMS signifie "short message services" pour services de messages court en anglais).

Ensuite, pendant l'étape 34, l'utilisateur appèle par son téléphone mobile 3 le serveur d'applications 11 de sa banque pour recharger son porte-monnaie électronique. On comprend donc que le téléphone mobile est en cours d'une première opération, la communication téléphonique, autorisée par une première carte à puce, la carte SIM.

Pour prévenir des abus et toute utilisation frauduleuse de la carte SIM 5 pendant que celle-ci est sortie du poste 3 alors que la communication autorisée par cette carte 5 est encore en cours, on associe lors de l'étape 36 la carte SIM 5 au téléphone mobile 3 par un lien informatique avant de remplacer la carte SIM 5 dans le lecteur par le porte-monnaie électronique 7. Cette association par un lien informatique consiste par exemple en un échange de données d'authentification mutuelle réalisé sous la forme d'un échange d'une clé de cryptage.

Bien entendu, on peut envisager de nombreuses façons pour associer par un lien informatique la carte SIM 5 au téléphone mobile 3. Ainsi, on peut prévoir l'inscription d'une clé de cryptage partagé dans la carte SIM 5 et dans le téléphone mobile 3, cette clé étant par exemple distribuée par le serveur de l'opérateur du réseau téléphonique.

L'idée générale du lien informatique est qu'après l'établissement de ce lien, la carte SIM contient des données informatiques correspondant à d'autres données contenues dans le téléphone mobile ou reçues par celui-ci du serveur 9 de l'opérateur téléphonique.

Cette association de la carte SIM 5 au téléphone mobile 3 a pour effet de défendre l'utilisation de la carte SIM 5 avec d'autres téléphones mobiles au moins jusqu'à la fin de la communication en cours.

A cet effet, pendant l'étape 38, on enregistre par exemple dans la base de données du serveur 9 un refus temporaire d'accès au réseau téléphonique par l'intermédiaire de la carte SIM 5 associé au téléphone mobile 3.

Puis, lors de l'étape 40, on remplace dans le lecteur la carte SIM 5 par le porte-monnaie électronique 7.

Pendant l'étape 42 on réalise une transaction entre le porte-monnaie électronique et le serveur d'application 11 de la banque. Cette transaction est dans le cadre de la présente invention une "seconde opération", car elle a lieu pendant la première opération qui est la communication téléphonique. Cette seconde opération peut par exemple consister à interroger le compte de l'utilisateur et à recharger le porte - monnaie en fonction du solde sur le compte de l'abonné.

Bien entendu, on peut aussi envisager d'autres types d'application, comme par exemple l'achat de billets à distance en payant avec un porte-monnaie électronique ou une carte bancaire.

De plus, on peut envisager de réaliser plusieurs "secondes opérations" autorisées par respectivement "plusieurs secondes cartes à puce" insérées tour à tour dans le lecteur de carte du terminal 1.

Une fois que cette seconde opération est terminée, on remplace pendant l'étape 44 le porte-monnaie électronique 7 par la carte SIM 5.

Puis, lors de l'étape 46, on vérifie le lien informatique entre le téléphone mobile 3 et la carte SIM 5 insérée.

Si la vérification se déroule positivement, c'est-à-dire la carte 5 et le téléphone se reconnaissent par l'intermédiaire du lien informatique, ce dernier est supprimé lors de l'étape 48. De même, le refus d'accès enregistré dans la base de donnée du serveur 9 de l'opérateur du réseau téléphonique est supprimé et la carte SIM peut de nouveau être utilisée avec tout poste de téléphone mobile pour passer des communications.

En revanche, si la vérification se déroule négativement, soit parce qu'une autre carte SIM que celle associée au téléphone 3 est introduite dans le lecteur de carte à puce, soit parce qu'après avoir retiré le porte-monnaie électronique 7, la carte SIM 5 n'a pas été introduite dans le lecteur dans un délai prescrit, le refus d'accès au réseau par l'intermédiaire de la carte SIM 5 devient définitif au cours de l'étape 50.

Selon une autre variante qui dépend du type d'application ou de l'opération que l'on peut réaliser avec la seconde carte à puce, on envisage d'annuler la seconde opération rétroactivement si l'étape de remplacement ou l'étape de vérification se déroulent de manière négative, et on supprime ensuite le refus d'accès enregistré dans la base de données du serveur 9 de l'opérateur téléphonique. Cette variante est particulièrement avantageuse pour des 〈〈 secondes 〉〉 opérations telles que les ventes par correspondance.

On comprend que le procédé selon l'invention permet de passer de manière sécurisée lors d'une première opération une seconde opération tout en utilisant deux cartes à puce avec un même lecteur de cartes à puces. Ainsi, une utilisation frauduleuse en particulier de la première carte à puce, notamment d'une carte SIM, peut être efficacement empêchée.

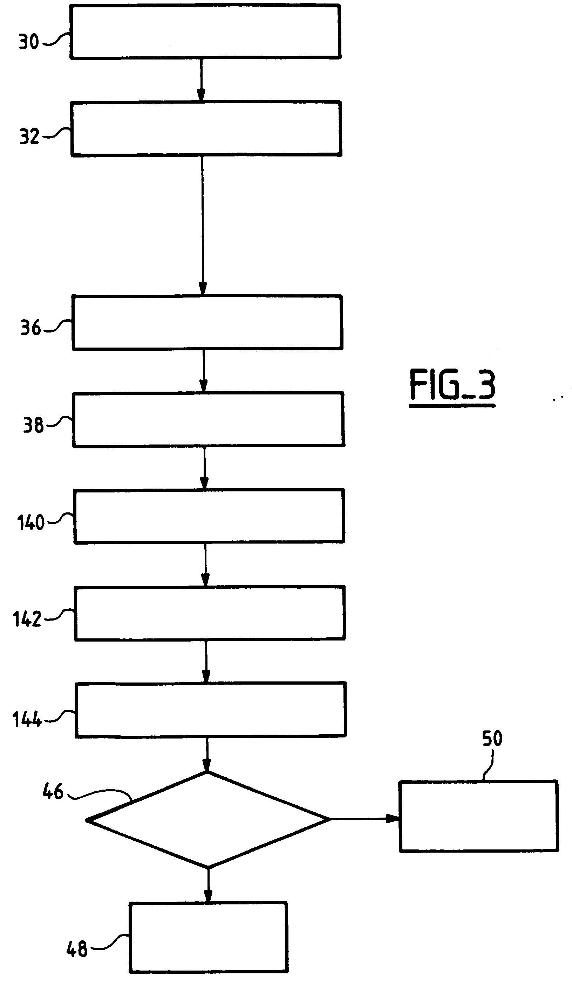

On se réfère maintenant à la figure 3 qui décrit une variante du procédé selon l'invention. Sur cette figure, les étapes identiques à celles du procédé de la figure 2 portent les mêmes numéros de références. Selon cette variante, la carte à puce 5 est une carte multifonctions remplissant à la fois la fonction carte SIM et par exemple la fonction d'une carte bancaire de retrait.

Selon celle variante, après avoir établi un lien informatique entre la première carte à puce 5 et le terminal lors des étapes 36 et 38, on peut retirer la carte à puce 5 du lecteur du terminal mobile lors de l'étape 140 et passer, pendant l'étape 142 une seconde opération qui est d'un type différent de la première opération. Ainsi, dans le présent exemple, l'utilisateur peut, pendant la seconde opération, retirer de l'argent d'un guichet automatique.

En revanche, il ne peut pas utiliser la carte pour une opération du même type que la première opération engagée, c'est-à-dire dans le présent exemple, l'utilisateur ne peut pas utiliser la carte à puce multifonctions pour relier un autre téléphone mobile au réseau de télécommunications de l'opérateur.

En fonction du niveau de sécurité souhaité par l'opérateur pour son réseau de télécommunications, celui-ci peut permettre à l'utilisateur au moins de recevoir des appels téléphoniques sur son poste alors que la carte à puce 5 contenant les données d'identifications d'abonné est retirée du lecteur de carte à puce.

Selon un premier développement avantageux, envisageable du fait du degré de sécurité élevé du procédé selon l'invention dans l'utilisation des cartes à puces, l'opérateur peut autoriser de continuer un appel téléphonique uniquement quand celui-ci a été commencé avant le retrait de la première carte du lecteur de carte du terminal 1.

Selon un second développement avantageux, l'opérateur peut même permettre de passer des appels téléphoniques sur le réseau de télécommunications auquel le terminal est relié. Toutefois, une fois que le téléphone mobile est déconnecté du réseau de télécommunications, par exemple par des difficultés radio du réseau de télécommunications, par un arrêt du poste ou par enlèvement de la batterie de celui-ci, il sera nécessaire de réinsérer la carte multi-fonctions dans le lecteur de carte à puce du terminal.

Puis, pendant l'étape 144, on réinsère la carte à puce multifonctions 5 dans le lecteur du terminal 1.

La fin du procédé se déroule donc conformément aux étapes 46, et 48 ou 50 décrites au regard de la figure 2.

Bien entendu, la présente invention ne se limite pas aux téléphones mobiles. Elle peut être mise en oeuvre avec tout terminal ayant un lecteur de carte à puce et permettant des accès à des serveurs distants d'applications. On cite à titre d'exemple les guichets automatiques, des minitels équipés d'un lecteur de carte à puce, ou encore des ordinateurs équipés d'un lecteur de carte à puce.

## Revendications

1. Procédé pour réaliser, lors d'une première opération autorisée par une première carte à puce (5) et ayant lieu entre un terminal (1) et un serveur distant (9), au moins une seconde opération de type différent de celui de la première opération, le terminal (1) comprenant un lecteur de cartes à puce apte à recevoir la première carte à puce (5), caractérisé en ce que
- avant de retirer la première carte à puce (5), introduite dans le lecteur pour autoriser la première opération en cours, on associe cette carte à puce (5) audit terminal (1) par un lien informatique, de sorte qu'au moins jusqu'à la fin de la première opération en cours, l'utilisation de cette carte à puce (5) avec d'autres terminaux que celui auquel cette carte à puce est associée, est défendue pour les opérations de même type que celui de la première opération,
- on réalise ladite au moins une seconde opération avec soit la première carte à puce (5), soit avec une (7) ou plusieurs secondes cartes à puce insérées tour à tour dans le lecteur à la place de la première carte à puce (5),
- après la fin de ladite au moins une seconde opération, on réinsère la première carte à puce (5) dans le lecteur de carte à puce,
- on vérifie le lien informatique par lequel la première carte à puce (5) et le terminal (1) sont associés,
- on autorise la poursuite de la première opération en cours uniquement pour un résultat positif de l'étape de vérification,
- on supprime le lien informatique entre la première carte à puce (5) et le terminal (1), et
- on autorise l'utilisation de la première carte (5) avec d'autres terminaux pour des opérations du même type que celui de la première opération à condition que les étapes de remplacement et de vérification du lien informatique se sont déroulées de manière positive.

2. Procédé selon la revendication 1, caractérisé en ce que la première opération est une procédure d'identification d'abonné et la première carte à puce (5) est une carte d'identification d'abonné.

3. Procédé selon la revendication 2, caractérisé en ce que la première carte à puce (5) est une carte multi-fonctions servant d'une part à l'identification de l'abonné et, d'autre part, à autoriser au moins une autre opération de type différent de celui de la première opération.

4. Procédé selon l'une quelconque des revendications 1 à 3, caractérisé en ce que ledit terminal (1) est un terminal de télécommunications, notamment un téléphone mobile (3).

5. Procédé selon les revendications 2 et 4 prises ensembles, caractérisé en ce que ladite première opération est une procédure d'identification d'abonné auprès d'un opérateur du réseau de télécommunications auquel le terminal de télécommunications est relié, cette première opération permettant au moins de recevoir des appels téléphoniques.

6. Procédé selon la revendication 5, caractérisé en ce que ladite première opération permet en outre de continuer un appel téléphonique commencé avant le retrait de la première carte du lecteur de carte du terminal (1).

7. Procédé selon la revendication 5, caractérisé en ce que ladite première opération permet de passer des appels téléphoniques sur le réseau de télécommunications auquel le terminal (1) est relié.

8. Procédé selon l'une quelconque des revendications 1 à 7, caractérisé en ce que lors de l'étape d'association de la première carte à puce (5) au terminal (1) par un lien informatique, on échange des données d'authentification mutuelle entre le terminal (1) et la première carte à puce (5).

9. Procédé selon la revendication 8, caractérisé en ce que les données d'authentification mutuelle sont échangées sous forme d'une clé de cryptage.

10. Procédé selon l'une quelconque des revendications 1 à 9, caractérisé en ce que pour défendre l'utilisation, pour les opérations du même type que la première opération, de la première carte avec d'autres terminaux que celui auquel la première carte (5) est associée, on enregistre dans le serveur (9) relatif à la première opération une information de refus d'accès à des opérations par l'intermédiaire de la première carte (5).

11. Procédé selon l'une quelconque des revendications 1 à 9, caractérisé en ce que pour défendre l'utilisation de la première carte pour les opérations de même type que la première opération avec d'autres terminaux que celui auquel la première carte (5) est associée, on rend la première carte à puce elle-même inutilisable.

12. Procédé selon la revendication 10 ou 11, caractérisé en ce qu'après écoulement d'un intervalle de temps prédéterminé après le retrait de la première carte ou si l'étape de remplacement ou l'étape de vérification du lien informatique se sont déroulées de manière négative, on bloque définitivement l'utilisation de la première carte (5).

13. Procédé selon la revendication 10 ou 11, caractérisé en ce qu'après écoulement d'un intervalle de temps prédéterminé après le retrait de la première carte ou si l'étape de remplacement ou l'étape de vérification du lien informatique se sont déroulées de manière négative, on annule la seconde opération.

14. Procédé selon la revendication 13, caractérisé en ce que l'on autorise de nouveau l'utilisation de la première carte (5) avec d'autres terminaux.

15. Procédé selon l'une quelconque des revendications 1 à 14, caractérisé en ce que la seconde opération est uniquement autorisée par une seconde carte à puce (7) insérée dans le lecteur de cartes à puce du terminal (1).

16. Procédé selon l'une quelconque des revendications 1 à 15, caractérisé en ce que la ou les secondes cartes à puce (7) sont des porte-monnaie électroniques ou des cartes d'accès de services.
